# EUROPEAN PATENT SPECIFICATION

(11) **EP 1 278 340 B1**
(45) Date of publication and mention of the grant of the patent: **09.03.2005**
(21) Application number: 01306230.2
(22) Date of filing: 19.07.2001
(51) Int. Cl.: H04L 12/56

(54) **Controlling levels of traffic in a telecommunications network, and a network node therefore**
Regelung der Verkehrslast in einem Telekommunikationsnetz, und ein entsprechender Netzknoten
Contrôle du niveau de trafic dans un réseau de télécommunication, et noeud de réseau correspondant

(43) Date of publication of application: 22.01.2003
(73) Proprietor: LUCENT TECHNOLOGIES INC., Murray Hill, New Jersey 07974-0636 (US)
(72) Inventor: Lagerberg, Ko, 7556 HN Hengelo (NL); Leijdekkers, Peter, 7521 PL Enschede (NL); Zivkovic, Miroslav, 7511 KL Enschede (NL)
(74) Representative: Sarup, David Alexander

(56) References cited:
- EP-A- 0 944 209
- EP-A- 1 091 528
- WO-A-01/31857
- US-A- 6 119 235

## Description

### Technical Field

The present invention relates to a telecommunications network, a network node therefor and a method of controlling levels of best-effort traffic.

### Background of the Invention

Modern local area networks provide support for real-time multimedia and/or business critical applications, for example video conferencing. These Quality of Service (QoS)-enabled applications typically reserve a portion of the available bandwidth prior to a service/application session, and rely on the availability of the bandwidth throughout the session. The telecommunications network guarantees this bandwidth availability by restricting the throughput of other applications that do not have these QoS demands. The traffic generated by these non-QoS applications is called best effort traffic.

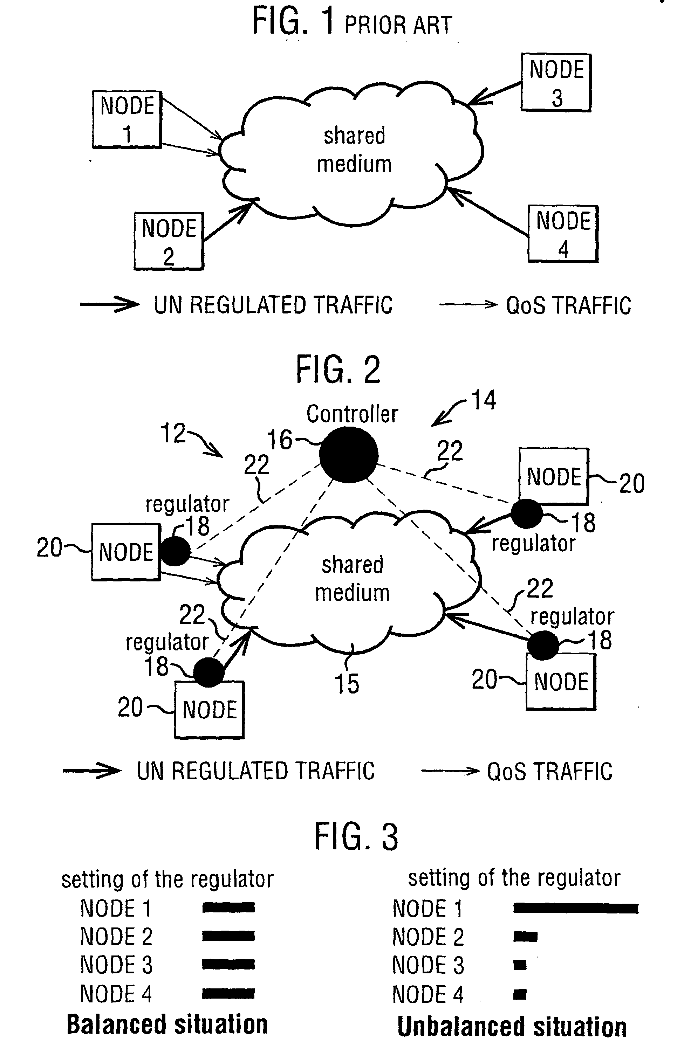

In single shared-medium networks such as shared Ethernet (CSMA/CD(carrier sense multiple access/collision detect)) or wireless LAN (CSMA/CA(carrier sense multiple access/collision avoidence)), QoS traffic is insufficiently protected from best effort traffic within the same physical network. Although a QoS-aware application can reserve bandwidth using network operating system functions, there is no distinction between QoS traffic and best effort traffic on medium access level. Since nodes sending best effort traffic are not aware of any bandwidth that is reserved or used by other nodes, some nodes can even consume all the network bandwidth, leaving QoS applications without the possibility of using any reservable bandwidth at all. This is illustrated in Figure 1 below. When, for example, nodes 2,3 and 4 are sending a large amount of best effort traffic over the shared medium, QoS traffic from node 1 which should be sent with acceptable quality of service is jeopardized.

The problem described above has to date not been satisfactorily solved. In most ordinary (i.e. switched) LANs the problem does not occur since all nodes have a direct non-shared connection with sufficient bandwidth to a QoS-aware switch. At the switch best effort traffic is dropped when throughput restrictions are exceeded. Therefore a commonly proposed remedy for the problem described above is to change the network architecture from shared to switched LAN. This is however not always desirable (e.g. legacy LANs) or possible (e.g. wireless LANs).

Some earlier attempts have been made to address the problem. Internet Engineering Task Force (IETF) Request for Comments (RFC) No. 2814 describes a Bandwidth Manager protocol, which can be used in combination with RSVP to perform bandwidth reservations in a LAN segment. It is however ineffective on shared LANs. Another IETF RFC No.2816 briefly mentions the problem but proposes segment switching. US Patent 6049549 (Adaptive Media Control) describes an admission control mechanism for wired LANs. The solution is session-based and requires changes in the (already standardized) MAC layer and application, which is problematic.

Various approaches to traffic level control in a telecommunications network are described in European patent applications EP-A-0944209 and EP-A-1091528, and US patent US6119235.

It is known from EP-A-0944209 to provide a telecommunications network comprising a plurality of nodes and a controller operative to control levels of traffic transmitted from nodes, in which the controller is operative to control levels of a first type of traffic transmitted from nodes so as to keep bandwidth available for traffic sent with a predetermined quality of service, in which at least some nodes include a respective regulator of the first type of traffic, said regulators being controlled by traffic level control signals sent by the controller, in which the regulators are controlled by respective traffic level control signals indicating the maximum level of the first type of traffic which can be sent per unit time.

### Summary of the Invention

The present invention is characterised over the disclosure of EP-A-0944209 in that the network is a shared Ethernet network or wireless local area network, the first type of traffic is best effort-traffic, and the respective traffic level control signals depend on the amounts of data waiting at nodes to be sent as best-effort traffic.

In its preferred embodiments, the present invention advantageously provides guarantees for QoS traffic in shared medium networks. This allows network equipment vendors to offer total QoS solutions, even within a shared medium network. The quality of real-time and multimedia applications is enhanced, and business-critical applications get the priority they need on the network. The present invention in its preferred embodiments is transparent to applications, i.e. an application does not need to be changed to benefit. The present invention in its preferred embodiments does not require any changes to the MAC layer either.

Preferably at least some nodes include a respective regulator of best effort traffic, said regulators being controlled by best-effort traffic level control signals set by the controller. Preferably all the nodes or at least substantially all the nodes include such regulators.

Preferably the regulators are controlled by a common best-effort traffic level control signal so as to set the maximum level of best-effort traffic sent per unit time by their respective nodes to be the same level.

Alternatively preferably the regulators are controlled by respective best-effort traffic level control signals so as to set the maximum level of best-effort traffic which can be sent per unit time dependent on the amounts of data waiting at nodes to be sent.

The present invention also provides a method of controlling levels of traffic transmitted from nodes in a telecommunications network by controlling levels of a first type of traffic transmitted from nodes in a telecommunications network so as to keep bandwidth available for traffic sent with a predetermined quality of service by providing a controller of levels of the first type of traffic in which the controller sends control signals to the nodes indicating the maximum level of the first type of traffic which can be sent per unit time, the nodes being provided with regulators controlled by the control signals and operative to limit the level of the first type of traffic per unit time sent by the respective node, characterised by the network being a shared Ethernet network or wireless local area network, the first type of traffic being best-effort traffic, and the respective traffic level control signals depending on the amounts of data waiting at nodes to be sent as best-effort traffic.

Preferably the controller sends control signals to the nodes, the nodes being provided with regulators controlled by the control signals and operative to limit the level of best-effort traffic per unit time sent by the respective node.

### Brief Description of the Drawings

A preferred embodiment of the present invention will now be described by way of example and with reference to the Figures, in which:
Figure 1 is a schematic illustration of a known telecommunications network (prior art),
Figure 2 is a schematic illustration of a telecommunications network according to an embodiment of the present invention, and
Figure 3 is an illustration of possible regulator settings in the telecommunications network shown in Figure 2.

### Detailed Description

There is a mechanism to regulate the best effort traffic at the source (i.e. at the node). This requires that there are provisions in the network to control the amount of QoS traffic that is allowed within the network. As shown in Figure 2 an example of such a provision is an admission control server 12 that restricts the QoS traffic in a network 14 including a shared medium 15 according to the network capacity. QoS traffic is therefore not controlled nor affected. The shared medium can be, for example, shared Ethernet (CSMA/CD) or wireless Local Area Network (LAN) (CSMA/CA).

The admission controller 12 involves a central controller 16 , regulators 18 at all nodes 20 and control messages 22 between the regulators 18 and the central controller 16.

Each node 20 is equipped with a regulator 18, which controls the amount of best effort traffic that is allowed to be sent by the node. The regulators 18 are centrally operated by the controller 16 , which has knowledge about the current amount of QoS traffic and the total network capacity of the shared medium at any time. The controller 16 distributes the available network capacity that can be used for best effort traffic (total capacity minus present QoS traffic) among the nodes 20 which are active and controls the regulators 18 accordingly by sending control messages 22 to the regulators 18.

The regulators 18 inform the controller 16 on a regular basis about the amount of best effort traffic that is waiting to be transmitted. The controller 16 takes this into account when determining the setting (i.e. the amount of best effort traffic allowed to be sent) of each regulator 18 . The controller 16 sends, with the same regular interval, control messages 22 containing the current setting to the regulators 18.

When a particular node has a lot of data to send compared to the other nodes, the controller 16 assigns a larger share of the available bandwidth to that node. This is illustrated in Figure 3 for both balanced (i.e. equal) and unbalanced (i.e. unequal) load situations. In a balanced situation, the regulators 18 at each node 20 allow the same maximum of best effort traffic per unit time to be sent. In an unbalanced situation the regulators 18 have different settings. For example, as illustrated in Figure 3 node 1 can send more best effort traffic per unit time than node 2 which can send more than node 3 or node 4.

In some embodiments, the messaging protocols between regulators 18 and controller 16 could be standardised.

## Claims

1. A telecommunications network (14) comprising a plurality of nodes (20) and a controller (16) operative to control levels of traffic transmitted from nodes, in which the controller is operative to control levels of a first type of traffic transmitted from nodes so as to keep bandwidth available for traffic sent with a predetermined quality of service, in which at least some nodes include a respective regulator of the first type of traffic, said regulators being controlled by traffic level control signals sent by the controller, in which the regulators (18) are controlled by respective traffic level control signals indicating the maximum level of the first type of traffic which can be sent per unit time, **characterised in that** the network is a shared Ethernet network or wireless local area network, the first type of traffic is best effort traffic, and the respective traffic level control signals (22) depend on the amounts of data waiting at nodes to be sent as best-effort traffic.

2. A telecommunications network according to claim 1, in which at least substantially all nodes (20) include a respective regulator (18) of best effort traffic, said regulators being controlled by best-effort traffic level control signals sent by the controller.

3. A telecommunications network according to claim I or claim 2, in which the traffic level control signals are sent at regular intervals.

4. A method of controlling levels of traffic transmitted from nodes in a telecommunications network by controlling levels of a first type of traffic transmitted from nodes (20) in a telecommunications network (14} so as to keep bandwidth available for traffic sent with a predetermined quality of service by providing a controller (16) of levels of the first type of traffic, in which the controller (16) sends control signals to the nodes indicating the maximum level of the first type of traffic which can be sent per unit time , the nodes being provided with regulators ( 18) controlled by the control signals (22) and operative to limit the level of the first type of traffic per unit time sent by the respective node (20), **characterised by** the network being a shared Ethernet network or wireless local area network, the first type of traffic being best effort traffic, and the respective traffice level control signals (22) depending on the amounts of data waiting at nodes to be sent as best-effort traffic.

## Patentansprüche

1. Telekommunikationsnetz (14) mit einer Mehrzahl von Knoten (20) und einer Steuerung (16) zum Regeln von von Knoten übertragenen Verkehrshöhen, wobei durch die Steuerung Höhen an einer ersten Art von von Knoten übertragenem Verkehr geregelt wird, um Bandbreite für mit einer vorbestimmten Dienstgüte gesendeten Verkehr verfügbar zu halten, wobei mindestens einige Knoten einen entsprechenden Regler der ersten Verkehrsart enthalten, wobei diese Regler durch durch die Steuerung gesendete Verkehrslastregelungssignale gesteuert werden, wobei die Regler (18) durch jeweilige Verkehrslastregelsignale gesteuert werden, die die maximale Höhe der ersten Verkehrsart anzeigen, die pro zeiteinheit gesendet werden kann, **dadurch gekennzeichnet, daß** das Netz ein geteiltes Ethernet-Netz oder drahtloses Ortsnetz ist, wobei die erste Verkehrsart Verkehr nach besten Bemühungen ist und die entsprechenden Verkehrslastregelsignale (22) von der Datenmenge abhängig sind, die an Knoten warten, um als Verkehr nach besten Bemühungen gesendet zu werden.

2. Telekommunikationsnetz nach Anspruch 1, wobei mindestens im wesentlichen alle Knoten (20) einen jeweiligen Regler (18) von Verkehr nach besten Bemühungen enthalten, wobei diese Regler durch von der Steuerung gesendete Verkehrslastregelsignale nach besten Bemühungen gesteuert werden.

3. Telekommunikationsnetz nach Anspruch 1 oder Anspruch 2, wobei die Verkehrslastregelsignale in regelmäßigen Abständen gesendet werden.

4. Verfahren zum Regeln von von Knoten übertragenen Verkehrshöhen in einem Telekommunikationsnetz durch Regeln der Höhen einer ersten von Knoten (20) in einem Telekommunikationsnetz (14) übertragenen Verkehrsart, um Bandbreite für mit einer vorbestimmten Dienstgüte gesendeten Verkehr verfügbar zu halten, durch Bereitstellen einer Steuerung (16) für Höhen der ersten Verkehrsart, wobei die Steuerung (16) Regelsignale zu den Knoten sendet, die die maximale Höhe der ersten Verkehrsart anzeigen, die pro Zeiteinheit gesendet werden kann, wobei die Knoten mit durch die von dem entsprechenden Knoten (20) gesendeten Regelsignalen (22) gesteuerten Reglern (18) zum Begrenzen der Höhe der ersten Verkehrsart pro Zeiteinheit versehen sind, **dadurch gekennzeichnet, daß** das Netz ein geteiltes Ethernet-Netz oder drahtloses Ortsnetz ist, wobei die erste Verkehrsart Verkehr nach besten Bemühungen ist und die entsprechenden Verkehrslastregelsignale (22) von der Datenmenge abhängig sind, die an den Knoten warten, um als Verkehr nach besten Bemühungen gesendet zu werden.

## Revendications

1. Réseau de télécommunication (14) comprenant une pluralité de noeuds (20) et un contrôleur (16) fonctionnel pour commander les niveaux du trafic transmis depuis les noeuds, dans lequel le contrôleur est fonctionnel pour commander les niveaux d'un premier type de trafic transmis à partir des noeuds de façon à conserver la largeur de bande disponible pour le trafic envoyé avec une qualité de service prédéterminée, dans lequel au moins certains des noeuds incluent un régulateur respectif du premier type de trafic, lesdits régulateurs étant commandés par les signaux de commande de niveau de trafic envoyés par le contrôleur, dans lequel les régulateurs (18) sont commandés par les signaux de commande de niveau de trafic respectif, indiquant le niveau maximal du premier type de trafic qui peut être envoyé par unité de temps, **caractérisé en ce que** le réseau est un réseau Ethernet partagé ou un réseau local sans fil, le premier type de trafic est le trafic au meilleur prix, et les signaux de commande de niveau de trafic respectif (22) sont fonction des quantités de données attendant au niveau des noeuds d'être envoyées comme trafic au meilleur prix.

2. Réseau de télécommunication selon la revendication 1, dans lequel au moins sensiblement tous les noeuds (20) incluent un régulateur respectif (18) du trafic au meilleur prix, lesdits régulateurs étant commandés par les signaux de commande de niveau de trafic au meilleur prix envoyés par le contrôleur.

3. Réseau de télécommunication selon la revendication 1 ou la revendication 2, dans lequel les signaux de commande de niveau du trafic sont envoyés à des intervalles réguliers.

4. Procédé de commande de niveaux de trafic transmis depuis des noeuds dans un réseau de télécommunication en commandant les niveaux d'un premier type de trafic transmis depuis des noeuds (20) dans un réseau de télécommunication (14) de façon à conserver la largeur de bande disponible pour le trafic envoyé avec une qualité de service prédéterminée en prévoyant un contrôleur (16) de niveaux du premier type de trafic, dans lequel le contrôleur (16) envoie les signaux de commande aux noeuds indiquant le niveau maximal du premier type de trafic qui peuvent être envoyés par unité de temps, les noeuds étant munis de régulateurs (18) commandés par les signaux de commande (22) et fonctionnels pour limiter le niveau du premier type de trafic par temps unitaire envoyé par le noeud respectif (20), **caractérisé par** le réseau étant un réseau Ethernet partagé ou un réseau local sans fil, le premier type de trafic étant le trafic au meilleur prix, et les signaux de commande de niveau de trafic respectif (22) étant fonction des quantités de données attendant aux noeuds d'être envoyés comme trafic au meilleur prix.
